# EUROPÄISCHE PATENTSCHRIFT

(11) **EP 2 025 690 B1**
(45) Veröffentlichungstag und Bekanntmachung des Hinweises auf die Patenterteilung: **01.02.2012**
(21) Anmeldenummer: 08012713.7
(22) Anmeldetag: 15.07.2008
(51) Int. Cl.: C08F 265/06, C09D 151/00, C08F 263/02, C08F 257/02

(54) **Wässrige Polymerisat-Sekundärdispersionen zur Herstellung von Beschichtungen**
Aqueous polymer secondary dispersions for manufacturing coatings
Dispersions secondaires d'un produit de polymérisation aqueux de revêtements

(30) Priorität: 27.07.2007 DE 102007035366
(43) Veröffentlichungstag der Anmeldung: 18.02.2009
(73) Patentinhaber: Bayer MaterialScience AG, 51368 Leverkusen (DE)
(72) Erfinder: Münzmay, Thomas, Dr., 41539 Dormagen (DE); Melchiors, Martin, Dr., 42799 Leichlingen (DE); Hackbarth, Sandra, 50181 Bedburg (DE); Gewiß, Heinz-Dietmar, 40668 Meerbusch (DE)

(56) Entgegenhaltungen:
- EP-A- 0 287 144
- EP-A- 0 292 004
- WO-A-99/45078
- DE-A1- 2 536 312
- US-A1- 2006 100 305

## Beschreibung

Die Erfindung betrifft wässrige Sekundärdispersionen von Polymerisaten auf Basis spezieller Acrylatbausteine, ein Verfahren zu deren Herstellung und Verwendung als Bindemittel zur Herstellung von blasenfreien Beschichtungen.

Aus einer Vielzahl von Veröffentlichungen und Patenten ist bekannt, Dispersionen auf Basis von Polyacrylaten in wasserverdünnbaren Lacken und Beschichtungssystemen einzusetzen.

Beim Auftrag beliebiger Lacke auf ein Substrat wird Luft in gelöster Form oder als Mikrobläschen im Lackfilm eingeschlossen. Während der Lack trocknet und Lösemittel und/oder Wasser entweicht, entstehen Bläschen oder wachsen die vorhandenen Mikrobläschen. Ein Teil dieser Bläschen löst sich wieder im Lackpolymer, ein anderer Teil steigt zur Lackoberfläche und entweicht (rise & rupture model). Bei einer bestimmten Filmstärke kann ein Teil der Bläschen nicht mehr vollständig entweichen und es entstehen sichtbare Lackfilmdefekte wie Bläschen (blisters), Nadelstiche (pin holes) oder Krater (craters). Die Filmstärke bei der dieses Phänomen auftritt, bezeichnet man als "blasenfreie Schichtstärke" oder "Kochergrenze". Die blasenfreie Schichtstärke ist ein wesentliches Qualitätsmerkmal für die Verarbeitungssicherheit eines Lackes.

Die blasenfreie Schichtstärke von wässrigen Zweikomponenten(2K)-Polyarethan(PUR)-Lacken gemäß dem Stand der Technik beträgt 60 bis 80 µm (siehe W. Hovestadt & E. Jürgens (1999) - Blasenfreie Applikation wässriger 2K-PUR-Lacke. In: Farbe & Lack 8/99: 30-37 und WO-A 2002/079296). Insbesondere beim Lackieren dreidimensionaler Teile entstehen aber durch Fließeffekte immer Bereiche, in denen höhere Lack-Schichtstärken als die genannten 60 bis 80 µm auftreten. Bei Verwendung von wässrigen 2K-PUR-Lacken gemäß dem Stand der Technik können dann Bläschen im Lack auftreten, die zu empfmdlichen Störungen der Lackoberfläche und damit zur Wertminderung der lackierten Teile führen.

Von daher bestand ein dringender Bedarf nach wässrigen Dispersionen, die sich zu 2K-PUR-Lacken mit einer höheren blasenfreien Schichtstärke verarbeiten lassen. Grundlage dieser Lacke sollten Dispersionen sein, die aufgrund reaktiver Gruppen in der Lage sind bereits bei Raumtemperatur mit geeigneten Vernetzern zu hochwertigen Beschichtungen auszuhärten. Darüber hinaus sollten die Dispersionen einen hohen Festkörpergehalt, eine ausgezeichnete Lagerstabilität, und zwar sowohl als Dispersion als auch im Lack, aufweisen. Die Lackfilme sollten zudem sehr gute Beständigkeitseigenschaften gegen Lösemittel, Wasser und Umwelteinflüsse zeigen.

Aufgabe der vorliegenden Erfindung bestand somit in der Bereitstellung von wässrigen Sekundärdispersionen von Polymerisaten, die sich zu wässrigen 2K-PUR-Lacken mit höherer blasenfreier Schichtstärke verarbeiten lassen und die oben geforderten Anforderungen erfüllen.

Überraschend wurde nun gefunden, dass Polymerisat-Sekundärdispersionen, die ausgewählte (Meth)acrylsäureesterbausteine als Monomere enthalten, hervorragend zur Herstellung wässriger 2K-PUR-Lacke mit deutlich höherer blasenfreie Schichtstärke geeignet sind.

Gegenstand der vorliegenden Erfindung sind daher wässrige Sekundärdispersionen enthaltend ein Copolymerisat P), aufgebaut aus
I) einem hydroxyfunktionellen, hydrophoben Polymerisat, enthaltend als Aufbaumonomere
   Ia) (Meth)-acrylsäureester mit C₁- bis C₂₂-Kohlenwasserstoffresten im Alkoholteil und/oder Vinylaromaten und/oder Vinylester und
   Ib) hydroxyfunktionelle Monomere sowie
II) einem hydroxyfunlctionellen, hydrophilen Polymerisat, enthaltend als Aufbaukomponenten
   IIa) (Meth)-acrylsäureester mit C₁- bis C₂₂-Kohlenwasserstoffresten im Alkoholteil und/oder Vinylaromaten und/oder Vinylester,
   IIb) hydroxyfunktionelle Monomere und
   IIc) säurefunktionelle Monomere,
dadurch gekennzeichnet, dass die Aufbaumonomeren vom Typ (Meth)Acrylsäureester (Ia)/(IIa) spezielle Monomere B) enthalten, die einen aliphatischen Rest mit mindestens zwölf Kohlenstoffatomen im Alkoholteil aufweisen und deren Gehalt, bezogen auf das Polymerisat P), mindestens 12,5 Gew.-%, bevorzugt 15 bis 60 Gew.-%, besonders bevorzugt 20 bis 45 Gew.-% beträgt.

Gegebenenfalls kann das Copolymerisat P) noch als weitere Polymerisationsstufe ein hydroxyfunktionelles, hydrophobes Copolymerisat II') auf Basis von hydroxyfunktionellen (Meth)-acrylsäureester oder auf Basis von hydroxyfunktionellen (Meth)-acrylsäureester und nichtfunktionellen (Meth)-acrylsäureester bzw. Vinylaromaten als Aufbaukomponente enthalten. Dies wird im Anschluss an die Herstellung des Copolymerisats II) in situ durch Copolymerisation der Monomere hergestellt.

Geeignete Monomere Ia)/IIa) sind die Veresterungsprodukte von Acryl oder Methacrylsäure mit einfachen Alkoholen z.B. Ethylacrylat, Ethylmethacrylat, n-Butylacrylat, iso-Butylacrylat, tert-Butylacrylat, Monomere B, Methylmethacrylat, n-Butylmethacrylat, Cyclohexylacrylat und Cyclohexylmethacrylat, sowie Vinylphenyle wie Styrol, Vinyltoluol, α-Methylstyrol bzw. Mischungen dieser und anderer Monomere. Bevorzugte (Meth)-acrylsäureester a) sind solche mit linear- oder verzweigt-aliphatischen Kohlenwasserstoffresten mit 1 bis 18 C-Atomen. Besonders bevorzugt sind n-Butylacrylat, Methylmethacrylat, n-Butylmethacrylat und Styrol.

Geeignete Monomere Ia/IIa) sind weiterhin die Versterungsprodukte von Vinylalkohol mit linearen oder verzweigten, aliphatischen Carbonsäuren wie beispielsweise Vinylacetat, Vinylpropionat oder Vinylbutyrat. Bevorzugt sind die Vinylester verzweigter, aliphatischer Carbonsäuren der allgemeinen Formel (I), 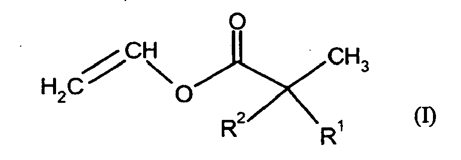 in welcher R¹ und R² gesättigte Alkylgruppen sind, enthaltend zusammen 6, 7 oder 8 C-Atome, entsprechend der Verbindungen VeoVa^{™} 9, 10 und 11.

Die genannten Monomere unterscheiden sich hinsichtlich der Glastemperatur ihrer Homopolymere:

| **Monomer** | **T_{G} [°C]** |
|---|---|
| VeoVa^{™} 9 | + 70 |
| VeoVa^{™} 10 | - 3 |
| VeoVa^{™} 11 | - 40 |

Optional können auch weitere zur radikalischen Copolymerisation befähigte Monomere als Verbindungen der Komponente Ia/IIa) bei der Herstellung von Copolymerisat I) eingesetzt werden. Dies können beispielsweise Derivate der Acryl- oder Methacrylsäure wie Acrylamid, Methacrylamid, Acrylnitril oder Methacrylnitril sein. Weiterhin möglich sind Vinylether. Als weitere gegebenenfalls in untergeordneten Mengen einzusetzende Komponenten Ia/IIa) kommen di- oder höher-funktionelle (Meth)acrylatmonomere und/oder Vinylmonomere, wie z.B. Hexandioldi(meth)acrylat oder Divinylbenzol in Frage. Ebenfalls in Ia/IIa) können mit Alkylenoxiden modifizierte oder kettenverlängerte, polymerisierbare Monomere mit einem zahlenmittleren Molekulargewicht ≤ 3 000 g/mol, bevorzugt ≤ 500 g/mol eingesetzt werden. Geeignete Alkylenoxide sind hierfür bevorzugt Ethylen-, Propylen oder Butylenoxid einzeln oder in Mischungen.

Die erfmdungsgemäßen Polyacrylate enthalten mindestens 12,5 Gew.-%, bevorzugt 15 bis 60 Gew.-%, besonders bevorzugt 20 bis 45 Gew.-%, bezogen auf das Harz, spezielle Monomere B) vom Typ (Meth)Acrylsäureester, die einen aliphatischen Rest mit mindestens zwölf Kohlenstoffatomen enthalten. Geeignete Monomere dieses Typs sind die Ester aus Acrylsäure oder Methacrylsäure mit aliphatischen Alkoholen (Monoolen), die mindesten zwölf Kohlenstoffatome aufweisen, bevorzugt sind aliphatische, gesättigte, lineare Alkohole mit mindestens zwölf Kohlenstoffatomen.

Geeignete aliphatische, gesättigte, lineare Alkohole sind z.B. solche, die sich von natürlich vorkommenden Fettsäuren ableiten wie Lauryl- (C₁₂), Myristyl- (C₁₄), Palmityl- (C₁₆), Stearyl-(C₁₈) und Behenyl- (C₂₂) Alkohol. Weitere geeignete aliphatische, gesättigte Alkohole sind z.B. 2-Ethylhexanol, n-Octanol, Nonanol oder n-Decanol.

Weitere geeignete Monomere B) vom Typ (Meth)Acrylsäureester, die einen aliphatischen Rest mit mindestens 12 Kohlenstoffatomen enthalten, sind Laurylacrylat, Myristylacrylat, Palmitylacrylat, Stearylacrylat oder Behenylacrylat sowie die entsprechenden Methacrylsärederivate. Bevorzugte Monomere B) enthalten 12 bis 22 Kohlenstoffatome im Alkoholrest wie beispielsweise Verbindungen der allgemeinen Formel (II), 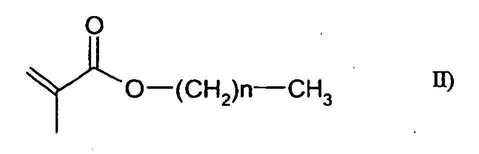 in welcher
n = 12, 16, oder 17 ist.

Weiterhin geeignet als Monomere B) sind (Meth)Acrylsäureester auf Basis cycloaliphatischer Alkohole (Monoolen) mit mindestens 12 Kohlenstoffatomen.

Geeignete hydroxyfunktionelle Monomere Ib)/IIb) sind z.B. 2-Hydroxyethylmethacrylat, 2-Hydroxypropylmethacrylat, 2-Hydroxyethylacrylat, 2-Hydroxypropylacrylat, 4-Hydroxybutylacrylat, 4-Hydroxybutylmethacrylat. Bevorzugte Monomere Ib)/IIb) sind 2-Hydroxyethylmethacrylat, 2-Hydroxypropylmethacrylat oder 4-Hydroxybutylacrylat sowie Mischungen dieser Verbindungen.

Geeignete olefinisch ungesättigte, säurefunktionelle Monomere IIc) sind sulfon- oder carbonsäurefunktionelle Monomere, bevorzugt sind carbonsäurefunktionelle Monomere wie Acrylsäure, Methacrylsäure, β-Carboxyethylacrylat, Crotonsäure, Fumarsäure, Maleinsäureanhydrid, Itaconsäure oder Monoalkylester zweibasiger Säuren bzw. Anhydride wie z.B. Maleinsäure-monoalkylester, besonders bevorzugt sind Acryl- oder Methacrylsäure.

Ferner geeignet als Verbindungen der Komponente IIc) sind auch ungesättigte, radikalisch polymerisierbare Verbindungen mit Phosphat- bzw. Phosphonat- oder Sulfonsäure- bzw. Sulfonatgruppen, wie z.B. in der WO-A 00/39181 (S. 8, Z. 13 - S. 9, Z. 19) beschrieben werden.

Der Anteil der Monomere Ia)/IIa), einschließlich der Monomere B), am Copolymerisat P) beträgt 23 bis 89,4 Gew.-Teile, bevorzugt 48 bis 85,3 Gew.-Teile und besonders bevorzugt 56,5 bis 81,5 Gew.-Teile, der Anteil der Monomere Ib)/IIb) am Copolymerisat P) beträgt 10 bis 65 Gew.-Teile, bevorzugt 13,5 bis 46,5 Gew.-Teile und besonders bevorzugt 17 bis 40 Gew.-Teile und der Anteil der Monomere IIc) am Copolymerisat P) beträgt 0,6 bis 12 Gew.-Teile, bevorzugt 1,2 bis 5,5 Gew.-Teile und besonders bevorzugt 1,5 bis 3,5 Gew.-Teile.

Die säurefunktionellen Monomere IIc) werden in solcher Menge eingesetzt, dass das Copolymerisat P) eine Säurezahl von 5 bis 55 mg KOH/g Feststoff, bevorzugt von 10 bis 35 mg KOH/g Feststoff und besonders bevorzugt von 12,5 bis 27,5 mg KOH/g Feststoff aufweist.

Der Anteil der hydroxyfunktionellen, hydrophoben Pfropfgrundlage I) am Copolymerisat P) beträgt 50 bis 95 Gew.-Teile, bevorzugt 75 bis 90 Gew.-Teile, der Anteil des hydroxyfunktionellen, hydrophilen Polymerisats II) am Copolymerisat P) beträgt 5 bis 50 Gew.-Teile, bevorzugt 10 bis 25 Gew.-Teile.

Die Vorgehensweise zur Polymerisation der ungesättigten Monomere ist dem Fachmann an sich vertraut. Typischerweise wird dazu in einem Reaktionsgefäß ein geeignetes Lösungsmittel vorgelegt und die ungesättigten Monomere im Zulaufverfahren unter Einsatz eines Radikalinitiators polymerisiert.

Als Initiatoren für die Polymerisationsreaktion eignen sich organische Peroxide wie Di-tert.-Butylperoxid, Dicumylperoxid oder tert.-Butylperoxy-2-ethylhexanoat und Azoverbindungen wie Azodiisobuttersäurenitril (AIBN). Die eingesetzten Initiatormengen hängen vom gewünschten Molekulargewicht ab. Aus Gründen der Prozesssicherheit und des leichteren Handlings können Peroxidinitiatoren auch als Lösung in geeigneten organischen Lösemitteln der oben genannten Art eingesetzt werden.

In der bevorzugten Ausführungsform des Verfahren erfolgt eine zweistufige Zugabe und Polymerisation der Monomerengemische I) und II) in der genannten Reihenfolge. Dabei wird in einem ersten Schritt (i) aus den Monomeren Ia) und Ib) ein hydroxyfunktionelles, hydrophobes Polymerisat I) mit einer OH-Zahl von 12 bis 250 mg KOH/g Feststoff, bevorzugt von 50 bis 200 mg KOH/g Feststoff hergestellt. In einem anschließenden Schritt (ii) wird in der aus Schritt (i) erhaltenen Lösung des Polymerisats I) das hydroxyfunktionelle, hydrophile Polymerisat II) aus den Monomeren IIa) bis IIc) hergestellt, wobei dieses hydroxyfunktionelle, hydrophile Polymerisat II) eine OH-Zahl von 20 bis 250 mg KOH/g Feststoff, bevorzugt von 120 bis 220 mg KOH/g Feststoff und eine Säurezahl von 50 bis 250 mg KOH/g Feststoff, bevorzugt von 110 bis 200 mg KOH/g Feststoff aufweist.

Die speziellen Monomere B) können sowohl in der Aufbaukomponente Ia) als auch in der Aufbaukomponente IIa) eingesetzt werden. Bevorzugt werden sie über die Aufbaukomponente Ia) in das Polymerisat eingebracht.

Die Herstellung des Copolymerisats P) erfolgt durch eine radikalisch initiierte Copolymerisation der Monomermischung I) und II) in organischen Cosolventien C). Die Menge an organischen Lösemitteln wird so bemessen, dass die resultierenden Lösungen der Copolymerisate einen Festkörpergehalt von 95 bis 60 Gew.-%, bevorzugt 92,5 bis 80 Gew.-% aufweisen.

Als geeignete organische Lösemittel C) kommen beliebige in der Lacktechnologie bekannte Lösemittel in Betracht, bevorzugt sind solche, die üblicherweise als Colöser in wässrigen Dispersionen eingesetzt werden, wie z.B. Alkohole, Ether, Ethergruppen-haltige Alkohole, Ester, Ketone oder unpolare Kohlenwasserstoffe z.B. aliphatische oder aromatische Kohlenwasserstoffen bzw. Gemische dieser Lösemittel.

Zur Neutralisation der im Polymerisat II) via Monomer IIc) einpolymerisierten Säuregruppen, bevorzugt Carboxylgruppen, können organische Amine oder wasserlösliche, anorganische Basen eingesetzt werden. Bevorzugt sind N-Methylmorpholin, Triethylamin, Dimethylethanolamin, Dimethylisopropanolamin, Methyldiethanolamin, Triethanolamin oder Ethyl-diisopropylamin. Ebenfalls geeignet sind Diethylethanolamin, Butanolamin, Morpholin, 2-Aminomethyl-2-methyl-propanol oder Isophorondiamin.

Das Neutralisationsmittel wird in solchen Mengen zugesetzt, dass der Neutralisationsgrad 70 bis 130 %, bevorzugt 90 bis 105 % der Säuregruppen beträgt, wobei besonders bevorzugt eine solche Menge Neutralisationsmittel zugesetzt wird, dass nach Überführung aller Säuregruppen in die Salzform noch freies Neutralisationsmittel vorhanden ist. Dies entspricht einem Neutralisationsgrad von >100 %. Es wurde gefunden, dass dadurch Dispersionsstabilität, Lackstabilität, Pigmentbenetzung und die filmoptischen Eigenschaften deutlich verbessert werden können.

Der pH-Wert der wässrigen Dispersion beträgt 6,0 bis 11,0, bevorzugt 7,0 bis 10,0, der Festkörpergehalt beträgt 35 bis 65 Gew.-%, bevorzugt 40 bis 55 Gew.-%.

Gegenstand der vorliegenden Erfindung ist somit auch ein Verfahren zur Herstellung der erfindungsgemäßen wässrigen Polyacrylatdispersionen, dadurch gekennzeichnet, dass in einem ersten Schritt (i) aus den Monomeren Ia) und Ib) eine hydroxyfunktionelle, hydrophobe Pfropfgrundlage I) mit einer OH-Zahl von 12 bis 250 mg KOH/g Feststoff hergestellt wird, in einem zweiten Schritt (ii) in der aus Schritt (i) erhaltenen Lösung der Pfropfgrundlage I) die Monomeren IIa) bis IIc) polymerisiert werden, wobei Monomere B) in Schritt (i) und/oder in Schritt (ii), bevorzugt in Schritt (i) eingesetzt werden und das resultierende hydroxyfunktionelle, hydrophile Polymerisat eine OH-Zahl von 20 bis 250 mg KOH/g Feststoff und eine Säurezahl von 50 bis 250 mg KOH/g Feststoff aufweist und die radikalisch initiierte Copolymerisation der Monomermischung I) und II) in Cosolventien C) erfolgt und anschließend das Neutralisationsmittel zur Erzeugung der für die Dispergierung notwendigen ionischen Gruppen nach dieser Copolymer-Herstellung zugegeben wird, gefolgt vom Dispergierschritt durch Zugabe von Wasser zum Copolymer) bzw. Überführen des Copolymeren in eine wässrige Vorlage.

Die erfmdungsgemäßen wässrigen Polyacrylatdispersionen werden gegebenenfalls zusammen mit anderen Bindemitteln oder Dispersionen, z.B. auf Basis von Polyestern, Polyurethanen, Polyethern, Polyepoxiden oder Polyacrylaten, in Kombination mit Vernetzerharzen und gegebenenfalls Pigmenten in oder als Lack bzw. Beschichtungsmittel eingesetzt. Vor, während oder nach der Herstellung der wässrigen Lack- bzw. Bindemittel durch Abmischung der Einzelkomponenten und auch im Fall der Herstellung von einkomponentig zu verarbeitenden Beschichtungsmitteln können die üblichen Hilfs- und Zusatzmittel der Lacktechnologie zugesetzt werden, wie z.B. Entschäumungsmittel, Verdickungsmittel, Pigmente, Dispergierhilfmittel, Katalysatoren, Hautverhinderungsmittel, Antiabsetzmittel oder Emulgatoren.

Beschichtungsmittel, enthaltend die erfmdungsgemäßen wässrigen Polyacrylatdispersionen, sind ebenfalls Gegenstand der vorliegenden Erfindung.

Die Beschichtungsmittel, enthaltend die erfindungsgemäßen wässrigen Polyacrylatdispersionen, eignen sich für alle Einsatzgebiete, in denen wässrige Anstrich- und Beschichtungssysteme mit einem erhöhten Eigenschaftsprofil Verwendung finden, z.B. Beschichtung mineralischer Baustoff-Oberflächen, Lackierung und Versiegelung von Holz und Holzwerkstoffen, Beschichtung metallischer Oberflächen, Beschichtung und Lackierung asphalt- oder bitumenhaltiger Straßenbeläge oder Lackierung und Versiegelung diverser Kunststoffoberflächen.

Bei den Lacken bzw. Beschichtungsmitteln auf Basis der erfindungsgemäßen wässrigen Polyacrylatdispersionen handelt es sich um Grundierungen, Füller, pigmentierte oder transparente Decklacke oder Klarlacke sowie Einschichtlacke, die in der Einzel- und Serienapplikation, z.B. im Bereich der Industrielackierung, Automobil-Erst- und -Reparaturlackierung, Anwendung finden können.

Bevorzugte Verwendungen der erfindungsgemäßen wässrigen Polyacrylatdispersionen in Kombination mit hydrophilen und/oder hydrophoben Polyisocyanaten, besonders bevorzugt in Kombination mit Mischungen von hydrophilen und hydrophoben Polyisocyanaten zur Herstellung von Zweikomponenten(2K)-Beschichtungsmitteln bzw. Lackierungen metallischer Oberflächen oder Kunststoffen bei Raumtemperatur bis 180°C, oder in Kombination mit Aminoplastvernetzerharzen zur Herstellung von Beschichtungen und Lackierungen metallischer Oberflächen bei 110 bis 180°C in Form von Einschichtlacken oder als Decklacke.

Zweikomponenten(2K)-Beschichtungsmittel enthaltend die erfindungsgemäßen wässrigen Polyacrylatdispersionen sowie mindestens ein Vernetzer, bevorzugt Polyisocyanate, sind ebenfalls Gegenstand der vorliegende Erfindung.

Solche Polyisocyanate weisen typischerweise 2 oder mehr NCO-Gruppen pro Molekül auf und basieren beispielsweise auf Isophorondiisocyanat, Hexamethylendiisocyanat, 1,4-Diisocyanatocyclohexan, Bis-(4-iso-cyanatocyclohexan)-methan, 1,3-Diisocyanatobenzol, Triisocyanatononan oder den isomeren 2,4- und 2,6-TDI und können ferner Urethan-, Isocyanurat und/oder Biuretgruppen aufweisen.
Bevorzugt ist der Einsatz niedrigviskoser, gegebenenfalls hydrophilierter Polyisocyanate der vorstehend genannten Art auf Basis aliphatischer oder cycloaliphatischer Isocyanate.

Die als Vernetzer eingesetzten Polyisocyanate weisen bei 23°C im Allgemeinen eine Viskosität von 10 bis 5 000 mPas auf und können auch, falls zur Viskositätseinstellung gewünscht, in Abmischung mit geringen Mengen an inerten Lösemitteln zum Einsatz gelangen.

Wasserlösliche oder dispergierbare Polyisocyanate sind z.B. durch Modifikation mit Carboxylat-, Sulfonat- und/oder Polyethylenoxidgruppen und/oder Polyethylenoxid/Polypropylenoxidgruppen erhältlich. Eine Hydrophilierung der Polyisocyanate ist z.B. durch Umsetzung mit unterschüssigen Mengen an einwertigen, hydrophilen Polyetheralkoholen möglich. Die Herstellung derartiger hydrophilierter Polyisocyanate ist beispielsweise in der EP-A 0 540 985 (S. 3, Z 55 bis S. 4 Z. 5) beschrieben.

Auch die in der DE-A 100 078 21 (S. 2 Z. 66 bis S. 3 Z. 5) beschriebenen wasserdispergierbaren Polyisocyanatgemische auf Basis von Triisocyanatononan sind geeignet, sowie mit ionischen Gruppen (Sulfonat-, Phosphonatgruppen) hydrophilierte Polyisocyanate, wie sie z.B. in der DE-A 100 24 624 (S. 3 Z. 13 bis 33) beschrieben sind.

Gut geeignet sind auch die in der EP-A 959 087 (S. 3 Z. 39 bis 51) beschriebenen Allophanatgruppen enthaltenden Polyisocyanate, die durch Umsetzung monomerenarmer Polyisocyanate mit Polyethylenoxidpolyetheralkoholen unter Allophanatisierungsbedingungen hergestellt werden.

Prinzipiell ist natürlich auch der Einsatz von Mischungen vorgenannter Polyisocyanat-Vernetzer. Besonders bevorzugt sind Mischungen, welche neben oben beschriebenen, Allophanatmodifizierten Polyisocyanaten auch hydrophilierte Polyisocyanate enthalten.

Die Herstellung der Beschichtung kann nach den unterschiedlichen Spritzverfahren wie beispielsweise Luftdruck-, Airless- oder Elektrostatik-Spritzverfahren unter Verwendung von Ein- oder gegebenenfalls Zweikomponenten-Spritzanlagen erfolgen. Die mit den erfindungsgemäßen wässrigen Polyacrylatdispersionen hergestellten Beschichtungsmassen können jedoch auch nach anderen Methoden, beispielsweise durch Strich, Rollen oder Rakeln appliziert werden.

### Beispiele:

### Rohstoffe:

### I) Monomere

Acrylsäure
n-Butylacrylat
n-Butylmethacrylat
2-Ethyl-Hexylmethacrylat
2-Hydroxyethylmethacrylat
Methylmethacrylat
Methacrylsäureester: 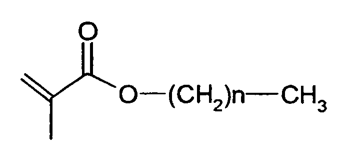
Methacrylsäureester 13,0 "AM009": n = 12, Synthetisches Laurylmethacrylat, (CAS-Nr. 90551-76-1, Röhm GmbH & Co. KG, Darmstadt)
Methacrylsäureester 17,4 "AM010": n = 16,4 (CAS-Nr. 90551-84-1, Röhm GmbH & Co. KG, Darmstadt)
Stearylmethacrylat: n = 17 (CAS-Nr. 32360-05-7)

### II) Initiator

Di-tert.-butylperoxid

### III) Lösungsmittel

- Butoxyl^{®}:: Essigsäure-(3-methoxy-n-butyl-)ester (Celanese Chemicals Europe GmbH, Deutschland)
- Solvesso^{®} 100:: aromatischer Kohlenwasserstoff, Siedebeginn (ASTM D86-05) 162°C, Exxon-Chemie, Esso Deutschland GmbH

### IV) Sonstige

- Baysilon^{®} VP AI 3468:: Verlaufshilfsmitte, Lanxess AG, Leverkusen, DE
- Bayhydur^{®} VP LS 2319:: Hydrophiliertes, aliphatisches Polyisocyanat auf Basis Hexamethylendiisocyanat, NCO-Gehalt = 18,2 ± 0,5 % , Bayer MaterialScience AG, Leverkusen, DE
- Borchigel^{®} PW25:: Verdicker, Borchers GmbH, Langenfeld, DE
- Desmodur^{®} XP 2565: Aliphatisches, Allophanat-modifiziertes Polyisocyanat auf Basis Isophorondiisocyanat, 80%ig in Butylacetat, NCO-Gehalt = 12,0 ± 0,5 % , Bayer MaterialScience AG, Leverkusen, DE
- Surfynol^{®} 104 BC:: Entschäumer und Benetzungshilfsmittel, AirProducts GmbH, DE

### Vergleichsbeispiel 1 (= Beispiel 3 aus EP-A 0 947 557)

In einem 6 1-Reaktionsgefäß mit Rühr-, Kühl- und Heizvorrichtung wurden 186 g Butylglykol und 186 g Solvesso^{®} 100 vorgelegt und auf 145°C aufgeheizt. Bei dieser Temperatur wurde eine Mischung 1) aus 750 g Methylmethacrylat, 125 g Styrol, 445 g 2-Hydroxyethylmethacrylat, 538 g n-Butylacrylat und 87 g n-Butylmethacrylat in 3 Stunden und unmittelbar anschließend eine Mischung 2) aus 128 g Methylmethacrylat, 180 g 2-Hydroxyethylmethacrylat, 100 g n-Butylacrylat und 60 g Acrylsäure in 1,5 Stunden zudosiert. Parallel dazu wurde innerhalb von 5 Stunden eine Lösung von 88 g Di-tert.-butylperoxid in 70 g einer 1:1 1 Mischung von Butylglykol und Solvesso^{®} 100 zudosiert. Anschließend wurde 2 Stunden bei 145°C nachgerührt, dann auf 100°C abgekühlt und 76 g N,N-Dimethyethanolamin zugegeben. Nach 30 Minuten Homogenisieren wurde innerhalb von 2 Stunden bei 80°C mit 2700 g Wasser dispergiert. Es wurde eine Dispersion mit folgenden Daten erhalten:

| | |
|---|---|
| OH-Gehalt (Festkörper; theoretisch berechnet) | 3,3% |
| Säurezahl (Festkörper) | 20 mg KOH/g |
| Festkörpergehalt | 43,8 % |
| Viskosität | 1400 mPas_{23°C} |
| pH-Wert (10 %ig in Wasser) | 8,1 |
| Neutralisationsgrad | 105% |
| Mittlere Teilchengröße | 110 nm |
| Cosolvens: | 7,7 Gew.-% |

### Beispiel 2 (erfindungsgemäß, 15% Methacrylsäureester 17,4)

In einem 6 1-Reaktionsgefäß mit Rühr-, Kühl- und Heizvorrichtung wurden 158,3 g Butylglykol und 220,6 g Solvesso^{®} 100 vorgelegt und auf 138°C aufgeheizt. Bei dieser Temperatur wurde innerhalb von 30 Minuten eine Mischung aus 8 g Butylglykol und 8 g Di-tert.-butylperoxid zugetropft. Anschließend wurden gleichzeitig innerhalb von 5 Stunden eine Mischung aus 34,3 g Butylglykol und 34,3 g Di-tert.-butylperoxid und eine Mischung aus 680,0 g-Methylmethacrylat, 445,0 g 2-2-Hydroxyethyl-methacrylat und 482,2 g n-Butylacrylat und 375,0 g Methacrylsäureester 17,4 zugetropft. Unmittelbar danach wurden gleichzeitig eine Mischung aus 8,0 g Butylglykol und 20,0 g Di-tert.-butylperoxid und eine Mischung aus 127,5 g Methylmethacrylat, 180,0 g 2-Hydroxyethyl-methacrylat, 100,0 g n-Butylacrylat und 60 g Acrylsäure zudosiert. Anschließend wurde 1 Stunde bei 138°C nachgerührt, dann auf 100°C abgekühlt und 77,9 g N,N-Dimethyethanolamin zugegeben. Nach 30 Minuten Homogenisieren wurde innerhalb von 2 Stunden bei 80°C mit 2795 g Wasser dispergiert. Es wurde eine Copolymerisat-Dispersion mit folgenden Daten erhalten:

| | |
|---|---|
| OH-Gehalt (theoretisch auf Festkörper) | 3,3% |
| Säurezahl (Festkörper) | 21 mg KOH/g |
| Festkörpergehalt | 43,0 % |
| Viskosität | 1750 mPas_{23°C} |
| H-Wert (10 %ig in Wasser) | 8,2 |
| Neutralisationsgrad | 105% |
| Mittlere Teilchengröße | 121 nm |
| Cosolvens: | 7,7 Gew.-% |

### Beispiel 3 (erfindungsgemäß 30 %, Methacrysäureester 17,4)

In einem 6 1-Reaktionsgefäß mit Rühr-, Kühl- und Heizvorrichtung wurden 158,3 g Butylglykol und 220,6 g Solvesso^{®} 100 vorgelegt und auf 138°C aufgeheizt. Bei dieser Temperatur wurde innerhalb von 30 Minuten eine Mischung aus 8 g Butylglykol und 8 g Di-tert.-butylperoxid zugetropft. Anschließend wurden gleichzeitig innerhalb von 5 Stunden eine Mischung aus 34,3 g Butylglykol und 34,3 g Di-tert.-butylperoxid und eine Mischung aus 460,5 g Methylmethacrylat, 445,0 g 2-Hydroxyethyl-methacrylat und 326,7 g n-Butylacrylat und 750,0 g Methacrylsäureester 17,4 zugetropft. Unmittelbar danach wurden gleichzeitig eine Mischung aus 8,0 g Butylglykol und 20,0 g Di-tert.-butylperoxid und eine Mischung aus 127,5 g Methylmethacrylat, 180,0 g 2-Hydroxyethyl-methacrylat, 100,0 g n-Butylacrylat und 60 g Acrylsäure zudosiert. Anschließend wurde 1 Stunde bei 138°C nachgerührt, dann auf 100°C abgekühlt und 77,9 g N,N-Dimethyethanolamin zugegeben. Nach 30 Minuten Homogenisieren wurde innerhalb von 2 Stunden bei 80°C mit 3155 g Wasser dispergiert. Es wurde eine Copolymerisat-Dispersion mit folgenden Daten erhalten:

| | |
|---|---|
| OH-Gehalt (theoretisch auf Festkörper) | 3,3 % |
| Säurezahl (Festkörper) | 20 mg KOH/g |
| Festkörpergehalt | 40,5 % |
| Viskosität | 2950 mPas_{23°C} |
| pH-Wert (10 %ig in Wasser) | 8,4 |
| Neutralisationsgrad | 105 % |
| Mittlere Teilchengröße | 110 nm |
| Cosolvens: | 7,7 Gew.-% |

### Beispiel 4 (erfindungsgemäß, 40% Methacrylsäureester 17,4)

In einem 6 1-Reaktionsgefäß mit Rühr-, Kühl- und Heizvorrichtung wurden 158,3 g Butylglykol und 220,6 g Solvesso^{®} 100 vorgelegt und auf 138°C aufgeheizt. Bei dieser Temperatur wurde innerhalb von 30 Minuten eine Mischung aus 8 g Butylglykol und 8 g Di-tert.-butylperoxid zugetropft. Anschließend wurden gleichzeitig innerhalb von 5 Stunden eine Mischung aus 34,3 g Butylglykol und 34,3 g Di-tert.-butylperoxid und eine Mischung aus 460,5 g Methylmethacrylat, 445,0 g 2-Hydroxyethyl-methacrylat und 76,7 g n-Butylacrylat und 1000,0 g Methacrylsäureester 17,4 zugetropft. Unmittelbar danach wurden gleichzeitig eine Mischung aus 8,0 g Butylglykol und 20,0 g Di-tert.-butylperoxid und eine Mischung aus 127,5 g Methylmethacrylat, 180,0 g 2-Hydroxyethyl-methacrylat, 100,0 g n-Butylacrylat und 60 g Acrylsäure zudosiert. Anschließend wurde 1 Stunde bei 138°C nachgerührt, dann auf 100°C abgekühlt und 77,9 g N,N-Dimethyethanolamin zugegeben. Nach 30 Minuten Homogenisieren wurde innerhalb von 2 Stunden bei 80°C mit 3155 g Wasser dispergiert. Es wurde eine Copolymerisat-Dispersion mit folgenden Daten erhalten:

| | |
|---|---|
| OH-Gehalt (theoretisch auf Festkörper) | 3,3% |
| Festtkörpergehalt | 40,3 % |
| Viskosität | 2200 mPas_{23°C} |
| pH-Wert (10 %ig in Wasser) | 8,3 |
| Neutralisationsgrad | 105% |
| Mittlere Teilchengröße | 133 nm |
| Cosolvens: | 7,7 Gew.-% |

### Beispiel 5 (erfindungsgemäß 15% Methacrylsäureester 13,0)

In einem 6 1-Reaktionsgefäß mit Rühr-, Kühl- und Heizvorrichtung wurden 158,3 g Butylglykol und 220,6 g Solvesso^{®} 100 vorgelegt und auf 138°C aufgeheizt. Bei dieser Temperatur wurde innerhalb von 30 Minuten eine Mischung aus 8 g Butylglykol und 8 g Di-tert.-butylperoxid zugetropft. Anschließend wurden gleichzeitig innerhalb von 5 Stunden eine Mischung aus 34,3 g Butylglykol und 34,3 g Di-tert.-butylperoxid und eine Mischung aus 680,0 g Methylmethacrylat, 445,0 g 2-Hydroxyethyl-methacrylat und 482,2 g n-Butylacrylat und 375,0 g Methacrylsäureester 13,0 zugetropft. Unmittelbar danach wurden gleichzeitig eine Mischung aus 8,0 g Butylglykol und 20,0 g Di-tert.-butylperoxid und eine Mischung aus 127,5 g Methylmethacrylat, 180,0 g 2-Hydroxyethyl-methacrylat, 100,0 g n-Butylacrylat und 60 g Acrylsäure zudosiert. Anschließend wurde 1 Stunde bei 138°C nachgerührt, dann auf 100°C abgekühlt und 77,9 g N,N-Dimethyethanolamin zugegeben. Nach 30 Minuten Homogenisieren wurde innerhalb von 2 Stunden bei 80°C mit 2765 g Wasser dispergiert. Es wurde eine Copolymerisat-Dispersion mit folgenden Daten erhalten:

| | |
|---|---|
| OH-Gehalt (theoretisch auf Festkörper) | 3,3 % |
| Säurezahl (Festkörper) | 20 mg KOH/g |
| Festkörpergehalt | 43,5% |
| Viskosität | 1950 mPas_{23°C} |
| pH-Wert (10 %ig in Wasser) | 8,3 |
| Neutralisationsgrad | 105% |
| Mittlere Teilchengröße | 116 nm |
| Cosolvens: | |

### Vergleichsbeispiel 6 15% 2-Ethylhexylmethacrylat

In einem 6 1-Reaktionsgefäß mit Rühr-, Kühl- und Heizvorrichtung wurden 158,3 g Butylglykol und 220,6 g Solvesso^{®} 100 vorgelegt und auf 138°C aufgeheizt. Bei dieser Temperatur wurde innerhalb von 30 Minuten eine Mischung aus 8 g Butylglykol und 8 g Di-tert.-butylperoxid zugetropft. Anschließend wurden gleichzeitig innerhalb von 5 Stunden eine Mischung aus 34,3 g Butylglykol und 34,3 g Di-tert.-butylperoxid und eine Mischung aus 680,0 g Methylmethacrylat, 445,0 g 2-Hydroxyethyl-methacrylat und 482,2 g n-Butylacrylat und 375,0 g 2-Ethylhexylacrylat zugetropft. Unmittelbar danach wurden gleichzeitig eine Mischung aus 8,0 g Butylglykol und 20,0 g Di-tert.-butylperoxid und eine Mischung aus 127,5 g Methylmethacrylat, 180,0 g 2-Hydroxyethyl-methacrylat, 100,0 g n-Butylacrylat und 60 g Acrylsäure zudosiert. Anschließend wurde 1 Stunde bei 138°C nachgerührt, dann auf 100°C abgekühlt und 77,9 g N,N-Dimethyethanolamin zugegeben. Nach 30 Minuten Homogenisieren wurde innerhalb von 2 Stunden bei 80°C mit 2675 g Wasser dispergiert. Es wurde eine Copolymerisat-Dispersion mit folgenden Daten erhalten:

| | |
|---|---|
| OH-Gehalt (theoretisch auf Festkörper) | 3,3% |
| Säurezahl (Festkörper) | 21 mg KOH/g |
| Festkörpergehalt | 45,0 % |
| Viskosität | 1720 mPas_{23°C} |
| pH-Wert (10 %ig in Wasser) | 8,5 |
| Neutralisationsgrad | 105% |
| Mittlere Teilchengröße | 131 nm |
| Cosolvens: | 7,7 Gew.-% |

### Beispiel 7 (erfindungsgemäß, 15% Stearylmethacrylat)

In einem 6 1-Reaktionsgefäß mit Rühr-, Kühl- und Heizvorrichtung wurden 158,3 g Butylglykol und 220,6 g Solvesso^{®} 100 vorgelegt und auf 138°C aufgeheizt. Bei dieser Temperatur wurde innerhalb von 30 Minuten eine Mischung aus 8 g Butylglykol und 8 g Di-tert.-butylperoxid zugetropft. Anschließend wurden gleichzeitig innerhalb von 5 Stunden eine Mischung aus 34,3 g Butylglykol und 34,3 g Di-tert.-butylperoxid und eine Mischung aus 680,0 g Methylmethacrylat, 445,0 g 2-Hydroxyethyl-methacrylat und 482,2 g n-Butylacrylat und 375,0 g Stearylmethacrylat zugetropft. Unmittelbar danach wurden gleichzeitig eine Mischung aus 8,0 g Butylglykol und 20,0 g Di-tert.-butylperoxid und eine Mischung aus 127,5 g Methylmethacrylat, 180,0 g 2-Hydroxyethyl-methacrylat, 100,0 g n-Butylacrylat und 60 g Acrylsäure zudosiert. Anschließend wurde 1 Stunde bei 138°C nachgerührt, dann auf 100°C abgekühlt und 77,9 g N,N-Dimethyethanolamin zugegeben. Nach 30 Minuten Homogenisieren wurde innerhalb von 2 Stunden bei 80°C mit 2765 g Wasser dispergiert. Es wurde eine Copolymerisat-Dispersion mit folgenden Daten erhalten:

| | |
|---|---|
| OH-Gehalt (theoretisch auf Festkörper) | 3,3 % |
| Säurezahl (Festkörper) | 20 mg KOH/g |
| Festkörpergehalt | 43,1 % |
| Viskosität | 2250 mPas_{23°C} |
| pH-Wert (10 %ig in Wasser) | 8,5 |
| Neutralisationsgrad | 105 % |
| Mittlere Teilchengröße | 115 nm |
| Cosolvens: | 7,6 Gew.-% |

### Anwendungsbeispiele 8A bis H

Es wurden Klarlacke gemäß unten stehender Tabelle formuliert und mit dem Stufenrakel aufgetragen. Die Bestimmung der Blasengrenze erfolgte visuell nach 30 Minuten Ablüften bei Raumtemperatur und 20 Minuten forcierter Trocknung bei 80°C:

**Tabelle 1: Bestimmung der Blasengrenze**

| Einsatzmengen in [g] | A | B | C | D | E | F | G | H |
|---|---|---|---|---|---|---|---|---|
| Beispiel 1 (Vergleich) | 504 | | | | | | | |
| Beispiel 2 | | 524 | | | | | | |
| Beispiel 3 | | | 555 | | | | | 555 |
| Beispiel 4 | | | | 558 | | | | |
| Beispiel 5 | | | | | 508 | | | |
| Beispiel 6 (Vergleich) | | | | | | 491 | | |
| Beispiel 7 | | | | | | | 522 | |
| Surfynol^{®} 104 BC | 11,3 | 11,3 | 11,3 | 11,3 | 11,3 | 11,3 | 11,3 | 11,3 |
| Borchigel^{®} PW25 | 1,5 | 1,5 | 1,5 | 1,5 | 1,5 | 1,5 | 1,5 | 1,5 |
| Baysilon^{®} VP AI 3468 | 9,4 | 9,4 | 9,4 | 9,4 | 9,4 | 9,4 | 9,4 | 9,4 |
| Bayhydur^{®} VP LS 2319 80%ig in Butoxyl^{®} | 191,1 | 191,1 | 191,1 | 191,1 | 191,1 | 191,1 | 191,1 | 44,5 |
| Desmodur^{®} XP 2565 | | | | | | | | 178,1 |
| Wasser | 65 | 10 | 16 | 11 | 61 | 78 | 12 | 18 |
| Blasengrenze [µm] | 60 | **90** | **130** | **110** | **100** | **105** | **120** | **145** |

## Patentansprüche

1. Wässrige Sekundärdispersionen enthaltend ein Copolymerisat P), aufgebaut aus
I) einem hydroxyfunktionellen, hydrophoben Polymerisat, enthaltend als Aufbaumonomere
Ia) (Meth)Acrylsäureester mit C₁- bis C₂₂-Kohlenwasserstoffresten im Alkoholteil und/oder Vinylaromaten und/oder Vinylester und
Ib) hydroxyfunktionelle Monomere sowie
II) einem hydroxyfunktionellen, hydrophilen Polymerisat, enthaltend als Aufbaukomponenten
IIa) (Meth)Acrylsäureester mit C₁- bis C₂₂-Kohlenwasserstoffresten im Alkoholteil und/oder Vinylaromaten und/oder Vinylester,
IIb) hydroxyfunktionelle Monomere und
IIc) säurefunktionelle Monomere,
**dadurch gekennzeichnet, dass** die Aufbaumonomeren vom Typ (Meth)Acrylsäureester (Ia) und/oder (IIa) spezielle Monomere B) enthalten, die einen aliphatischen Rest mit mindestens
zwölf Kohlenstoffatomen im Alkoholteil aufweisen und deren Gehalt bezogen auf das Polymerisat P) mindestens 12,5 Gew.-% beträgt.

2. Wässrige Sekundärdispersionen gemäß Anspruch 1, **dadurch gekennzeichnet, dass** der Anteil der Monomere Ia)/IIa), einschließlich der Monomere B), am Copolymerisat P) 23 bis 89,4 Gew.-Teile, der Anteil der Monomere 1b)/IIb) 10 bis 65 Gew.-Teile und der Anteil der Monomere IIc) 0,6 bis 12 Gew.-Teile beträgt.

3. Wässrige Sekundärdispersionen gemäß Anspruch 1, **dadurch gekennzeichnet, dass** die Monomere B) (Meth)Acrylsäureester mit C₁₆- bis C₂₂-Kohlenwasserstoffresten im Alkoholteil sind.

4. Wässrige Sekundärdispersionen gemäß Anspruch 1, **dadurch gekennzeichnet, dass** die Monomere B) Verbindungen der allgemeinen Formel (II), 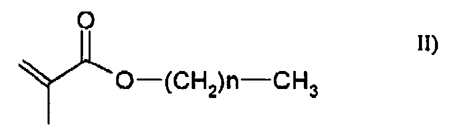 in welcher
n = 12, 16, oder 18 ist, sind.

5. Wässrige Polyacrylatdispersionen gemäß Anspruch 1, **dadurch gekennzeichnet, dass** die säurefunktionellen Monomere IIc) in solcher Menge eingesetzt werden, dass das Copolymerisat P) eine Säurezahl von 5 bis 55 mg KOH/g Feststoff aufweist.

6. Wässrige Polyacrylatdispersionen gemäß Anspruch 1, **dadurch gekennzeichnet, dass** der Anteil der hydroxyfunktionellen, hydrophoben Pfropfgrundlage I) am Copolymerisat P) 50 bis 95 Gew.-Teile, der Anteil des hydroxyfunktionellen, hydrophilen Copolymerisats II) am Copolymerisat P) 5 bis 50 Gew.-Teile beträgt.

7. Verfahren zur Herstellung der wässrigen Polyacrylatdispersionen gemäß Anspruch I, **dadurch gekennzeichnet, dass** in einem ersten Schritt (i) aus den Monomeren Ia) und Ib) eine hydroxyfunktionelle, hydrophobe Pfropfgrundlage I) mit einer OH-7.ah1 von 12 bis 250 mg KOH/g Feststoff hergestellt wird, in einem zweiten Schritt (ii) in der aus Schritt (i) erhaltenen Lösung der Pfropfgrundlage I) die Monomeren IIa) bis IIc) polymerisiert werden, wobei Monomere B) in Schritt (i) und/oder in Schritt (ii) eingesetzt werden und das resultierende hydroxyfunktionelle, hydrophile Polymerisat eine OH-Zahl von 20 bis 250 mg KOH/g Feststoff und eine Säurezahl von 50 bis 250 mg KOH/g Feststoff aufweist und die radikalisch initiierte Copolymerisation der Monomermischung I) und II) in Cosolventien C) erfolgt und anschließend das Neutralisationsmittel zur Erzeugung der für die Dispergierung notwendigen ionischen Gruppen nach dieser Copolymer-Herstellung zugegeben wird, gefolgt vom Dispergierschritt durch Zugabe von Wasser zum Copolymer) bzw. Überführen des Copolymeren in eine wässrige Vorlage.

8. Verfahren gemäß Anspruch 7, **dadurch gekennzeichnet, dass** die Monomere B) in Schritt i) eingesetzt werden.

9. Wässrige Beschichtungsmittel, enthaltend Polyacrylatdispersionen gemäß Anspruch I.

10. Zweikomponenten(2K)-Beschichtungsmittel enthaltend wässrige Polyacrylatdispersionen gemäß Anspruch 1 sowie mindestens ein Vernetzer.

11. Zweikomponenten(2K)-Beschichtungsmittel gemäß Anspruch 10, **dadurch gekennzeichnet, dass** der Vernetzer ein hydrophiles und/oder hydrophobes Polyisocyanat ist.

12. Zweikomponenten(2K)-Beschichtungsmittel gemäß Anspruch 11, **dadurch gekennzeichnet, dass** der Vernetzer ein hydrophiliertes und ein hydrophobes polyisocyanat ist.

13. Verwendung der Polyacrylatdispersionen gemäß Anspruch 1 zur Herstellung von Grundicrungen, Füllern, pigmentierten oder transparenten Decklacken sowie Einschichtlacken, Automobil-Erst- und -Reparaturlacken.

## Claims

1. Aqueous secondary dispersions comprising a copolymer P) composed of
I) a hydroxy-functional hydrophobic polymer comprising as constituent monomers
Ia) (meth)acrylic esters having C₁ to C₂₂ hydrocarbon radicals in the alcohol moiety and/or vinyl aromatics and/or vinyl esters and
Ib) hydroxy-functional monomers and also
II) a hydroxy-functional hydrophilic polymer comprising as constituent components
IIa) (meth)acrylic esters having C₁ to C₂₂ hydrocarbon radicals in the alcohol moiety and/or vinyl aromatics and/or vinyl esters,
IIb) hydroxy-functional monomers and
IIc) acid-functional monomers,
**characterized in that** the constituent monomers (Ia) and/or (IIa) of the (meth)acrylic ester type comprise specific monomers B) which have an aliphatic radical having at least twelve carbon atoms in the alcohol moiety and are present at not less than 12.5% by weight, based on the polymer P).

2. Aqueous secondary dispersions according to Claim 1, **characterized in that** the fraction of the monomers Ia)/IIa) including the monomers B), in the copolymer P) is 23 to 89.4 parts by weight, the fraction of the monomers Ib)/IIb) is 10 to 65 parts by weight and the fraction of the monomers IIc) is 0.6 to 12 parts by weight.

3. Aqueous secondary dispersions according to Claim 1, **characterized in that** the monomers B) are (meth)acrylic esters having C₁₆ to C₂₂ hydrocarbon radicals in the alcohol moiety.

4. Aqueous secondary dispersions according to Claim 1, **characterized in that** the monomers B) are compounds of the general formula II) 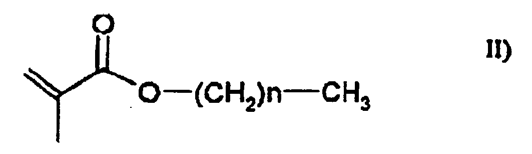 in which
n = 12, 16 or 18.

5. Aqueous polyacrylate dispersions according to Claim 1, **characterized in that** the acid-functional monomers IIc) are used in an amount such that the copolymer P) has an acid number of 5 to 55 mg KOH/g solids.

6. Aqueous polyacrylate dispersions according to Claim 1, **characterized in that** the fraction of the hydroxy-functional hydrophobic graft base I) in the copolymer P) is 50 to 95 parts by weight, the fraction of the hydroxy-functional hydrophilic copolymer II) in the copolymer P) is 5 to 50 parts by weight.

7. Process for preparing the aqueous polyacrylate dispersions according to Claim 1, **characterized in that** in a first step (i) the monomers Ia) and Ib) are used to prepare a hydroxy-functional hydrophobic graft base I) having an OH number of 12 to 250 mg KOH/g solids, in a second step (ii) the monomers IIa) to IIc) are polymerized in the solution of the graft base I) obtained from step (i), where monomers B) are used in step (i) and/or in step (ii), and the resulting hydroxy-functional hydrophilic polymer has an OH number of 20 to 250 mg KOH/g solids and an acid number of 50 to 250 mg KOH/g solids, and the free-radically initiated copolymerization of the monomer mixture I) and II) takes place in cosolvents C), and subsequently the neutralizing agent is added in order to generate the ionic groups necessary for dispersion, after this copolymer preparation, followed by the dispersing step by addition of water to the copolymer or transfer of the copolymer into an aqueous reservoir.

8. Process according to Claim 7, **characterized in that** the monomers B) are used in step i).

9. Aqueous coating compositions comprising polyacrylate dispersions according to Claim 1.

10. Two-component (2C) coating compositions comprising aqueous polyacrylate dispersions according to Claim 1 and also at least one crosslinker.

11. Two-component (2C) coating compositions according to Claim 10, **characterized in that** the crosslinker is a hydrophilic and/or hydrophobic polyisocyanate.

12. Two-component (2C) coating compositions according to Claim 11, **characterized in that** the crosslinker is a hydrophilized and a hydrophobic polyisocyanate.

13. Use of the polyacrylate dispersions according to Claim 1 for producing primers, surfacers, pigmented or transparent topcoat materials and also one-coat paints or automotive OEM and refinish paints.

## Revendications

1. Dispersions secondaires aqueuses contenant un copolymérisat P), constitué
I) d'un polymérisat hydrophobe, à fonction hydroxy, contenant en tant que monomères structuraux
Ia) des esters d'acide (méth)acrylique comportant des radicaux hydrocarbonés en C₁-C₂₂ dans le fragment alcool et/ou des composés vinylaromatiques et/ou des esters vinyliques et
Ib) des monomères à fonction hydroxy ainsi que
II) d'un polymérisat hydrophile, à fonction hydroxy, contenant en tant que composants structuraux
IIa) des esters d'acide (méth)acrylique comportant des radicaux hydrocarbonés en C₁-C₂₂ dans le fragment alcool et/ou des composés vinylaromatiques et/ou des esters vinyliques,
IIb) des monomères à fonction hydroxy et
IIc) des monomères à fonction acide,
**caractérisées en ce que** les monomères structuraux du type ester d'acide (méth)acrylique (Ia) et/ou (IIa) contiennent des monomères B) spéciaux qui comportent un radical aliphatique ayant au moins douze atomes de carbone dans le fragment alcool et dont la concentration par rapport au polymérisat P) est d'au moins 12,5 % en poids.

2. Dispersions secondaires aqueuses selon la revendication 1, **caractérisées en ce que** la proportion des monomères Ia/IIa, monomères B) inclus, dans le copolymérisat P) vaut de 23 à 89,4 parties en poids, la proportion des monomères Ib)/IIb) vaut de 10 à 65 parties en poids et la proportion des monomères IIc) vaut de 0,6 à 12 parties en poids.

3. Dispersions secondaires aqueuses selon la revendication 1, **caractérisées en ce que** les monomères B) sont des esters d'acide (méth)acrylique comportant des radicaux hydrocarbonés en C₁₆ à C₂₂ dans le fragment alcool.

4. Dispersions secondaires aqueuses selon la revendication 1, **caractérisées en ce que** les monomères B) sont des composés de formule générale (II), 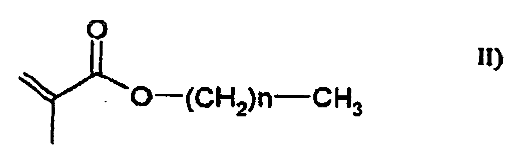 dans laquelle
n = 12, 16 ou 18.

5. Dispersions aqueuses de polyacrylates selon la revendication 1, **caractérisées en ce que** les monomères IIc) à fonction acide sont utilisés en quantité telle que le copolymérisat P) présente un indice d'acide de 5 à 55 mg de KOH/g de matière solide.

6. Dispersions aqueuses de polyacrylates selon la revendication 1, **caractérisées en ce que** la proportion de la base de greffage I) hydrophobe, à fonction hydroxy, dans le copolymère P) vaut de 50 à 95 parties en poids, la proportion du copolymérisat II) hydrophile, à fonction hydroxy, dans le copolymère P) vaut de 5 à 50 parties en poids.

7. Procédé pour la préparation des dispersions aqueuses de polyacrylates selon la revendication 1, **caractérisé en ce que** dans une première étape (i) on prépare à partir des monomères Ia) et Ib) une base de greffage I) hydrophobe, à fonction hydroxy, ayant un indice de groupes OH de 12 à 250 mg de KOH/g de matière solide, dans une deuxième étape (ii) on polymérise dans la solution de la base de greffage I), obtenue dans l'étape (i), les monomères IIa) à IIc), les monomères B) étant utilisés dans l'étape (i) et/ou dans l'étape (ii) et le polymérisat hydrophile résultant, à fonction hydroxy, présentant un indice de groupes OH de 20 à 250 mg de KOH/g de matière solide et un indice d'acide de 50 à 250 mg de KOH/g de matière solide et la copolymérisation à amorçage radicalaire du mélange de monomères I) et du mélange de monomères II) s'effectuant dans des cosolvants C) et ensuite, après la production de ces copolymères, on ajoute l'agent de neutralisation pour la production des groupes ioniques requis pour la dispersion, addition suivie de l'étape de dispersion par addition d'eau au copolymère ou du transfert du copolymère dans un récipient contenant de l'eau.

8. Procédé selon la revendication 7, **caractérisé en ce que** les monomères B sont utilisés dans l'étape i).

9. Compositions aqueuses de revêtement, contenant des dispersions de polyacrylates selon la revendication 1.

10. Compositions de revêtement bicomposants (2C) contenant des dispersions aqueuses de polyacrylates selon la revendication 1 ainsi qu'au moins un agent de réticulation.

11. Compositions de revêtement bicomposants (2C) selon la revendication 10, **caractérisées en ce que** l'agent de réticulation est un polyisocyanate hydrophile et/ou un polyisocyanate hydrophobe.

12. Compositions de revêtement bicomposants (2C) selon la revendication 11, **caractérisées en ce que** l'agent de réticulation consiste en un polyisocyanate rendu hydrophile et un polyisocyanate hydrophobe.

13. Utilisation des dispersions de polyacrylates selon la revendication 1 pour la production de primaires, d'apprêts de garnissage, de peintures de finition pigmentées ou transparentes ainsi que de peintures monocouches, de peintures pour la préparation et la première mise en peinture d'automobiles.
